# DEMANDE DE BREVET EUROPEEN

(11) **EP 3 062 011 A1**
(43) Date de publication de la demande: **31.08.2016**
(21) Numéro de dépôt: 16157088.2
(22) Date de dépôt: 24.02.2016
(51) Int. Cl.: F17C 11/00

(54) **JAUGEAGE DE SYSTEME DE STOCKAGE D'AMMONIAC BASE SUR UNE MESURE DE LA VARIATION D'INDICE DE REFRACTION**

(30) Priorité: 26.02.2015 FR 1551642
(71) Demandeur: Plastic Omnium Advanced Innovation and Research, 1120 Bruxelles (BE)
(72) Inventeur: SANOGO, Yacouba, 60200 Compiegne (FR); KOUAKOU, Anita, 60200 Compiègne (FR)
(74) Mandataire: Remy, Vincent Noel Paul

(57) **Abrégé**

L'invention concerne un système de stockage d'un gaz pour véhicule, ce système comprenant
- un conteneur (20) pour le stockage d'un matériau de stockage (50), ce gaz étant stocké par sorption sur le matériau de stockage (50);
- un dispositif de mesure (30) du gaz comprenant au moins un guide d'ondes (40) comprenant un coeur (45) entouré d'une gaine (80) en contact avec ledit coeur (45).

La gaine (80) comprend au moins une couche et le matériau de stockage (50) forme au moins une desdites au moins une couche de la gaine (80).

## Description

La présente invention concerne le contrôle d'un gaz tel que l'ammoniac ou l'hydrogène, adsorbé dans un matériau solide, en particulier dans des sels absorbants contenus dans un réservoir d'un système SCR (Sélective Catalytic Reduction) dans un véhicule automobile.

Les législations sur les émissions des véhicules et poids lourds prévoient, entre autres, une diminution des rejets d'oxydes d'azote NOx dans l'atmosphère. Pour atteindre cet objectif, on connaît le procédé SCR qui permet la réduction des oxydes d'azote par injection d'un agent réducteur, généralement l'ammoniac, dans la ligne d'échappement. Cet ammoniac peut provenir de gaz d'ammoniac absorbé dans des sels.

Avec le procédé SCR, les dégagements élevés de NOx produits dans le moteur lors d'une combustion à rendement optimisé sont traités en sortie de moteur dans un catalyseur. Ce traitement requiert l'utilisation de l'agent de réduction à un niveau de concentration précis et dans une qualité extrême. L'agent réducteur est ainsi précisément dosé et injecté dans le flux de gaz d'échappement où il convertit l'oxyde d'azote (NOx) en azote (N₂) et en eau (H₂0).

Pour ce faire, il est nécessaire d'équiper les véhicules d'un réservoir contenant l'agent réducteur, par exemple une ou plusieurs cartouches de sels dans lesquels du gaz ammoniac est adsorbé.

Or, il est important de pouvoir contrôler la quantité de l'agent de réduction dans le réservoir, pour pouvoir le doser de façon précise et avec un temps de réponse rapide de la mesure.

On connait, pour mesurer la teneur en ammoniac des cartouches, l'utilisation d'émetteurs-récepteurs à ultrasons. Les ultrasons émis se propagent dans la solution solide de la cartouche et on mesure le décalage temporel entre les ondes acoustiques émises et réfléchies à la surface du matériau solide. La quantité d'ammoniac peut être déduite de la mesure de ce décalage. Cependant cette mesure est imprécise car la concentration n'est pas homogène dans toute la solution et parce que la mesure dépend aussi de la présence indésirable de poussières ou particules parasites.

La présente invention vise à remédier à ces inconvénients. L'invention a notamment pour but de fournir un système de stockage d'un gaz pour véhicule, ce système comprenant :
- un conteneur pour le stockage d'un matériau de stockage, ce gaz étant stocké par sorption sur le matériau de stockage ;
- un dispositif de mesure du gaz comprenant au moins un guide d'ondes comprenant un coeur entouré d'une gaine en contact avec ce coeur.

Ce but est atteint grâce au fait que la gaine comprend au moins une couche et que le matériau de stockage forme la couche ou au moins une des couches de la gaine.

Grâce à ces dispositions, on mesure de façon précise la quantité d'ammoniac présente dans et sur le matériau de stockage qui est contenu dans le réservoir. De plus, la mesure étant effectuée par l'intermédiaire d'un guide d'ondes et des ondes traversant ce guide d'ondes, cette mesure est fiable et ne dépend pas notamment des poussières ou particules parasites éventuellement présentes dans le matériau de stockage.

L'invention concerne également un procédé pour la mesure de la quantité d'un gaz stocké par sorption sur un matériau de stockage.

Selon l'invention, ce procédé comprend les étapes suivantes :
- on prévoit un guide d'ondes comprenant un coeur entouré d'une gaine au sein du matériau, le matériau formant la gaine ;
- on émet un faisceau lumineux dans le guide d'ondes ;
- on mesure une grandeur caractéristique du faisceau lumineux issu du guide d'ondes ;
- on déduit de la mesure de cette grandeur la quantité de gaz.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en perspective du système de stockage selon l'invention,
- la figure 2 illustre un exemple de structure d'un conteneur du dispositif selon l'invention,
- la figure 3 est une vue schématique du dispositif de mesure selon l'invention dans le cas de trois conteneurs,
- la figure 4 est une vue schématique d'une première variante du dispositif de mesure selon l'invention,
- la figure 5 est une vue schématique d'une deuxième variante du dispositif de mesure selon l'invention,
- la figure 6 est une vue schématique d'une troisième variante du dispositif de mesure selon l'invention,
- la figure 7 représente schématiquement les étapes du procédé selon l'invention.

Dans la description ci-dessous, on définit l'amont et l'aval par rapport au sens normal de propagation des ondes dans le guide d'ondes depuis la source lumineuse 10 vers le photodétecteur 90.

Le système de stockage d'un gaz pour véhicule selon l'invention comprend un conteneur 20 dans lequel est stocké un matériau de stockage 50. Le gaz étant stocké par sorption sur ce matériau de stockage 50. Par exemple ce stockage est par adsorption ou absorption.

Le système de stockage comprend en outre un dispositif de mesure 30 du gaz comprenant un ou plusieurs guides d'ondes 40, chacun comprenant un coeur 45 entouré d'une gaine 80. Cette gaine 80 comprend une couche ou plusieurs couches, et est en contact avec le coeur 45. Le coeur 45 est situé dans le conteneur 20 de telle sorte que le matériau de stockage 50 forme au moins une des couches de la gaine 80 du guide d'ondes 40.

Selon une première variante de l'invention, la gaine 80 comprend une seule couche qui est formée entièrement par le matériau de stockage 50, qui est alors en contact avec le coeur 45. Une variation de la quantité de gaz dans le matériau de stockage 50 est alors directement mesurable par le dispositif de mesure 30, comme expliqué ci-après.

Selon un deuxième variante de l'invention, la gaine 80 comprend deux couches, à savoir une couche interne qui est formée par une gaine optique 81 et une couche externe qui entoure et est en contact avec cette couche interne, cette couche externe étant formée par le matériau de stockage 50. La gaine optique 81 est en contact avec le coeur 45. La propagation de l'onde dans le coeur 45 dépend alors à la fois de la gaine optique 81 et de l'indice de réfraction du matériau de stockage 50, comme expliqué ci-après. La gaine optique 81 est configurée de telle sorte qu'une variation de la quantité de gaz dans le matériau de stockage 50 est directement mesurable par le dispositif de mesure 30. En particulier, l'épaisseur de la gaine optique 81 est choisie en fonction d'une pluralité de paramètres dont l'indice de réfraction, le diamètre du coeur de la fibre.

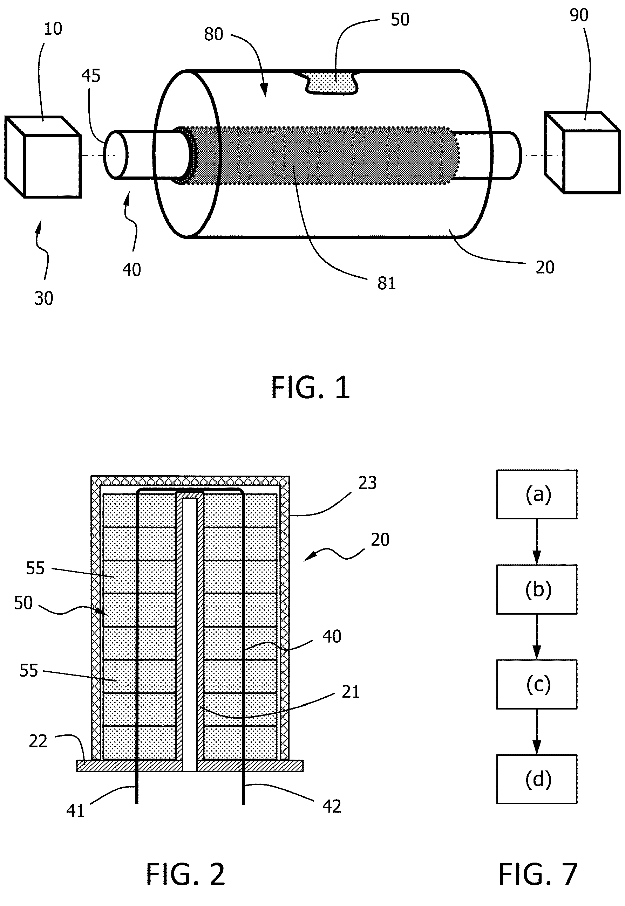

La figure 1 illustre cette deuxième variante.

En outre, le système de stockage comprend une source lumineuse 10 apte à émettre un faisceau lumineux et un photodétecteur 90 apte à détecter un faisceau lumineux, agencés de telle sorte que le guide d'ondes 40 est intercalé entre la source lumineuse 10 et le photodétecteur 90.

D'une manière générale, lorsqu'une onde traverse un guide d'ondes avec un coeur entouré d'une gaine, l'onde se réfléchit à l'interface entre le coeur et la gaine. Pour que la transmission de l'onde soit confinée au coeur du guide d'onde, il est nécessaire que l'indice de réfraction du matériau constituant le coeur du guide d'ondes soit supérieur à l'indice de réfraction du matériau constituant la gaine.

Les essais réalisés par les inventeurs montrent qu'une variation de la quantité d'ammoniac NH₃ dans le matériau de stockage 50 entraine une modification de l'indice de réfraction de ce matériau. Cette modification de l'indice de réfraction du matériau de stockage 50, qui forme la totalité ou une partie de la gaine 80 du guide d'ondes 40, entraine à son tour une modification de la puissance Pₒᵤₜ transmise mesurée par le photodétecteur 90, pour une puissance donnée Pin émise par la source 10. Lorsque la gaine 80 est constituée d'une gaine optique 81 entourée du matériau de stockage 50, l'épaisseur de la gaine optique 81 est suffisamment faible et/ou le photodétecteur 90 suffisamment sensible pour que les modifications de la quantité d'ammoniac NH₃ soient mesurables. On peut donc établir une corrélation entre le rapport Pₒᵤₜ/Pᵢₙ et la quantité d'ammoniac NH₃ dans le matériau de stockage 50, et par conséquent déterminer cette quantité en mesurant ce rapport de puissance.

La variation de la quantité d'ammoniac NH₃ dans le matériau de stockage 50 peut notamment être due à des variations de température ou de pression dans le conteneur 20.

Par exemple, le guide d'ondes 40 est une fibre optique.

Par exemple, la fibre optique a une section transversale circulaire d'environ 10 micromètres de diamètre.

Par exemple, le système de stockage est pour un système de dépollution à réduction catalytique sélective à base d'ammoniac.

Le matériau de stockage est par exemple un sel de formule générique M(NH₃)ₙX₂, où M est un ou plusieurs ions métalliques capables de s'associer à NH₃ (tel que Li, Mg, Ca, Sr, Ba, Mn), et où X est un halogène (tel que F, Cl, Br).

Par exemple, le matériau de stockage 50 est du chlorure de calcium ou du chlorure de baryum.

L'extrémité du guide d'ondes 40 qui dépasse du conteneur 20 du côté où se situe la source 10 est l'extrémité amont 41 du guide d'ondes 40, et l'extrémité du guide d'ondes 40 qui dépasse du conteneur 20 du côté où se situe le photodétecteur 90 est l'extrémité aval 42 du guide d'ondes 40.

L'invention a été décrite ci-dessus dans le cas où une partie au moins du conteneur 20 se situe entre l'extrémité amont 41 et l'extrémité aval 42 du guide d'ondes 40. Par exemple l'extrémité amont 41 et l'extrémité aval 42 du guide d'ondes 40 sont situées sur deux côtés opposés du conteneur 20, comme représenté sur la figure 1.

En variante, le guide d'ondes 40 est conformé en U et a ses deux extrémités, c'est-à-dire l'extrémité amont 41 et l'extrémité aval 42, dépassant d'un même côté du conteneur 20.

Cette configuration est illustrée en figure 2, qui montre un exemple de structure d'un conteneur 20 du dispositif selon l'invention, en coupe longitudinale.

Le matériau de stockage 50 est sous forme de disques 55 cylindriques annulaires qui sont empilés sur une tige centrale 21 munie à une extrémité d'un couvercle 22.

Avantageusement, la tige centrale 21 est creuse et est apte à loger un moyen de chauffage qui permet la régénération du gaz adsorbé dans le matériau de stockage 50.

Les disques 55 et le couvercle 22 sont percés de trous permettant d'y insérer chacune des deux branches du guide d'ondes 40 conformé en U. L'ensemble formé des disques 55 munies du guide d'ondes 40, de la tige centrale 21 et du couvercle 22 sont ensuite logées par coulissement dans un manchon 23 cylindrique fermé à une extrémité et dont l'autre extrémité est obturée par le couvercle 22 de façon à enfermer les disques 55. Le manchon 23 et le couvercle 22 forment ainsi l'enveloppe externe du conteneur 20. Le diamètre interne du manchon 23 est sensiblement égal au diamètre externe des disques 55. L'extrémité amont 41 et l'extrémité aval 42 du guide d'ondes 40 émergent du conteneur 20 au travers du couvercle 22.

Le système de stockage a été décrit ci-dessus dans le cas où il comprend un conteneur 20.

Cependant, le système de stockage peut comprendre au moins deux conteneurs.

Selon un mode de réalisation de l'invention, le guide d'ondes 40 de chaque conteneur 20 est intercalé entre une source lumineuse 10 propre à ce conteneur 20 et apte à émettre un faisceau lumineux, un photodétecteur 90 propre à ce même conteneur 20 et apte à détecter un faisceau lumineux.

Ainsi, pour chaque conteneur 20, on a en fonctionnement une source lumineuse 10 qui émet un faisceau lumineux, un guide d'ondes 40 qui traverse le matériau de stockage 50 contenu dans le conteneur 20 et qui transmet ce faisceau lumineux, et un photodétecteur 90 qui détecte ce faisceau lumineux.

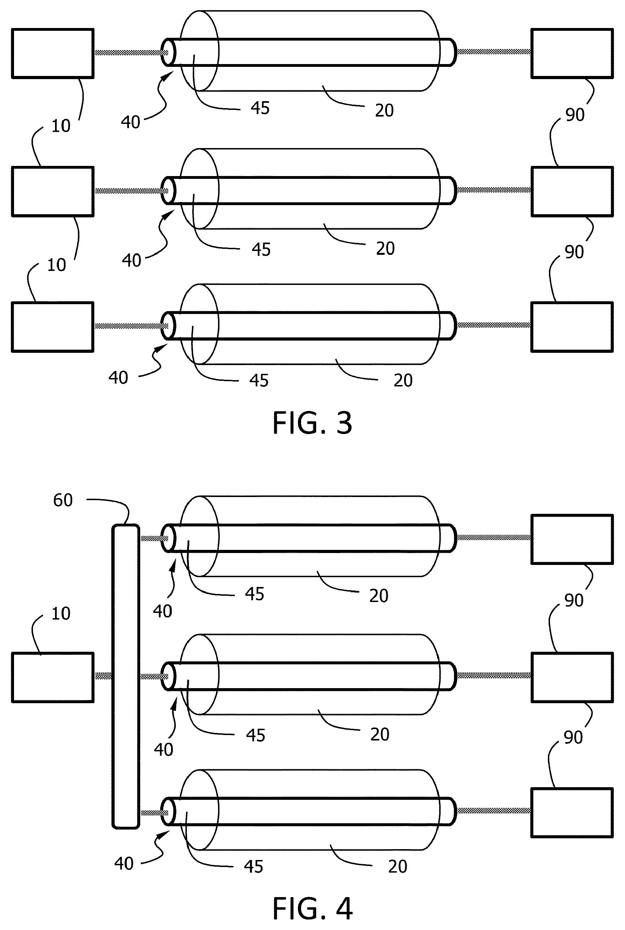

Cette configuration est représentée sur la figure 3 dans le cas de trois conteneurs 20.

Selon une première variante de ce mode de réalisation de l'invention, le système de stockage comprend une source lumineuse 10 commune à tous les conteneurs 20 et apte à émettre un faisceau lumineux, et un diviseur optique amont 60 pour distribuer le faisceau lumineux à chaque guide d'ondes 40 de chaque conteneur 20.

La figure 4 illustre cette première variante de ce mode de réalisation de l'invention.

Selon une deuxième variante de ce mode de réalisation de l'invention, le système de stockage comprend un photodétecteur 90 commun à tous les conteneurs 20 et apte à détecter un faisceau lumineux, un diviseur optique aval 70 pour collecter les faisceaux lumineux issus des guides d'ondes 40 de chaque conteneur 20 et les envoyer au photodétecteur 90 commun.

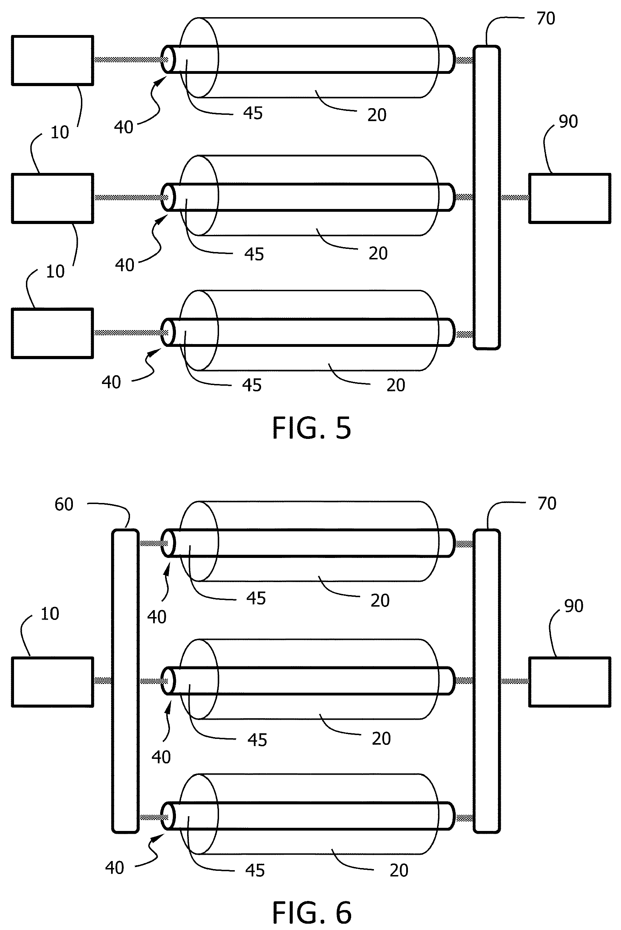

La figure 5 illustre cette deuxième variante de ce mode de réalisation de l'invention.

Selon une troisième variante de ce mode de réalisation de l'invention, les première et deuxième variantes sont combinées.

Ainsi, dans le système de stockage de cette troisième variante, la source lumineuse 10 est commune à tous les conteneurs 20 et un diviseur optique amont 60 distribue le faisceau lumineux à chaque guide d'ondes 40 de chaque conteneur 20. De même, le photodétecteur 90 est commun à tous les conteneurs 20 et un diviseur optique aval 70 collecte les faisceaux lumineux issus des guides d'ondes 40 de chaque conteneur 20 et les envoie à un photodétecteur 90 commun.

La figure 6 illustre cette troisième variante de ce mode de réalisation de l'invention.

L'invention concerne également un procédé pour la mesure de la quantité d'un gaz stocké par sorption sur un matériau de stockage 50. Selon ce procédé, on prévoit un guide d'ondes 40 comprenant un coeur 45 et on place ce coeur 45 au sein du matériau de stockage 50, ou on entoure ce coeur 45 du matériau de stockage 50 (étape (a)).

Ainsi, la surface latérale externe du coeur 45 forme une interface entre l'intérieur et l'extérieur du coeur 45, interface contre laquelle toute onde se propageant dans le guide d'ondes 45 se réfléchit intégralement en demeurant dans le coeur 45, et cette surface latérale externe est en contact avec le matériau de stockage 50.

En d'autres termes, le matériau de stockage 50 forme la gaine du guide d'ondes 45.

Avant ou après la mise en contact du guide d'ondes 40 avec le matériau de stockage 50, on place le matériau de stockage 50 dans un conteneur 20.

Ensuite on émet un faisceau lumineux dans le guide d'ondes 40, par exemple à l'aide d'une source lumineuse 10 (étape (b)).

Puis on mesure une grandeur caractéristique du faisceau lumineux issu du guide d'ondes 40, en détectant ce faisceau lumineux par exemple à l'aide d'un photodétecteur 90 (étape (c)).

La mesure de cette grandeur caractéristique permet de déduire la quantité de gaz dans et sur le matériau de stockage 50 (étape (d)).

Cette grandeur caractéristique est par exemple une puissance.

Comme décrit ci-dessus, cette puissance peut être la puissance Pₒᵤₜ transmise. On compare ensuite cette puissance Pₒᵤₜ avec une puissance donnée Pin émise par la source 10 pour en déduire la quantité de gaz dans et sur le matériau de stockage 50.

Alternativement, la grandeur caractéristique est la transmittance, définie comme le rapport du flux transmis φ sur le flux incident φₒ (émis par la source lumineuse 10), soit (φ/φₒ).

Les étapes de ce procédé sont illustrées en figure 7.

L'invention a été décrite ci-dessus dans le cas où le faisceau lumineux (émis par la source lumineuse 10) entre dans le coeur 45 du guide d'ondes 40 à une de ses extrémités et en sort à son autre extrémité pour être reçu par le photodétecteur 90. Il s'agit dans ce cas d'une mesure de la partie du faisceau lumineux qui s'est propagée dans le coeur 45 par transmission. Cette mesure présente l'avantage d'être la plus simple à réaliser et effectuer.

Alternativement, le photodétecteur 90 peut mesurer la partie du faisceau lumineux qui s'est propagée dans le coeur 45 et qui s'est réfléchie en arrière vers l'extrémité où est entré le faisceau lumineux émis par la source lumineuse 10. Cette mesure dite « en réflexion » peut s'effectuer à l'aide d'un coupleur ou d'un séparateur de faisceau.

L'invention n'est pas limitée à l'application aux systèmes SCR. Le système de stockage peut être utilisé pour de l'hydrogène ou encore toute autre application dans laquelle un gaz doit être stocké par sorption.

## Revendications

1. Système de stockage d'un gaz pour véhicule, le système comprenant:
- un conteneur (20) dans lequel est stocké un matériau de stockage (50), ledit gaz étant stocké par sorption sur ledit matériau de stockage (50);
- un dispositif de mesure (30) dudit gaz comprenant au moins un guide d'ondes (40) comprenant un coeur (45) entouré d'une gaine (80) en contact avec ledit coeur (45),
**caractérisé en ce que** ladite gaine (80) comprend au moins une couche et **en ce que** ledit matériau de stockage (50) forme au moins une desdites au moins une couche de la gaine (80).

2. Système de stockage selon la revendication précédente, dans lequel ledit guide d'ondes (40) est une fibre optique.

3. Système de stockage selon la revendication 1 ou 2, **caractérisé en ce que** ladite gaine (80) comprend une seule couche qui est formée par ledit matériau de stockage (50).

4. Système de stockage selon la revendication 1 ou 2, **caractérisé en ce que** ladite gaine (80) comprend une couche interne qui est formée par une gaine optique (81) et une couche externe qui entoure et est en contact avec ladite couche interne et qui est formée par ledit matériau de stockage (50).

5. Système de stockage pour système de dépollution à réduction catalytique sélective à base d'ammoniac, selon l'une quelconque des revendications précédentes.

6. Système de stockage selon l'une quelconque des revendications précédentes, **caractérisé en ce que** ledit guide d'ondes (40) est conformé en U et **en ce que** les deux extrémités dudit coeur (45) dépassent d'un même côté dudit conteneur (20).

7. Système de stockage selon l'une quelconque des revendications précédentes, **caractérisé en ce qu'**il comprend en outre une source lumineuse (10) apte à émettre un faisceau lumineux et un photodétecteur (90) apte à détecter un faisceau lumineux, agencés de telle sorte que ledit guide d'ondes (40) est intercalé entre ladite source lumineuse (10) et ledit photodétecteur (90).

8. Système de stockage selon l'une quelconque des revendications 1 à 6, **caractérisé en ce qu'**il comprend en outre une source lumineuse (10) apte à émettre un faisceau lumineux, et un photodétecteur (90) apte à détecter un faisceau lumineux et placé à la même extrémité dudit guide d'onde que ladite source lumineuse (10).

9. Système de stockage selon l'une quelconque des revendications 1 à 8, **caractérisé en ce qu'**il comprend au moins deux conteneurs (20), et **en ce que** le guide d'ondes (40) de chaque conteneur (20) est intercalé entre une source lumineuse (10) propre à ce conteneur (20) et apte à émettre un faisceau lumineux, et un photodétecteur (90) propre à ce même conteneur (20) et apte à détecter un faisceau lumineux.

10. Système de stockage selon l'une quelconque des revendications 1 à 8, **caractérisé en ce qu'**il comprend au moins deux conteneurs (20), et **en ce qu'**il comprend une source lumineuse (10) commune à tous les conteneurs (20) et apte à émettre un faisceau lumineux, et un diviseur optique amont (60) pour distribuer le faisceau lumineux à chaque guide d'ondes (40) de chaque conteneur (20).

11. Système de stockage selon l'une quelconque des revendications 1 à 8, **caractérisé en ce qu'**il comprend au moins deux conteneurs (20), et **en ce qu'**il comprend un photodétecteur (90) commun à tous les conteneurs (20) et apte à détecter un faisceau lumineux, et un diviseur optique aval (70) pour collecter les faisceaux lumineux issus des guides d'ondes (40) de chaque conteneur (20) et les envoyer au photodétecteur (90) commun.

12. Système de stockage selon la revendication 10, **caractérisé en ce qu'**il comprend un photodétecteur (90) commun à tous les conteneurs (20) et apte à détecter un faisceau lumineux, et un diviseur optique aval (70) pour collecter les faisceaux lumineux issus des guides d'ondes (40) de chaque conteneur (20) et les envoyer au photodétecteur (90) commun.

13. Procédé pour la mesure de la quantité d'un gaz stocké par sorption sur un matériau de stockage (50), ce procédé étant **caractérisé en ce qu'**il comprend les étapes suivantes :
(a) on prévoit un guide d'ondes (40) comprenant un coeur (45) entouré d'une gaine (80) en contact avec ledit coeur (45), ladite gaine (80) comprenant au moins une couche et ledit matériau (50) formant au moins une desdites au moins une couche de ladite gaine (80) ;
(b) on émet un faisceau lumineux dans ledit guide d'ondes (40) ;
(c) on mesure une grandeur caractéristique du faisceau lumineux issu dudit guide d'ondes (40) ;
(d) on déduit de ladite mesure de cette grandeur ladite quantité de gaz.

14. Procédé selon la revendication 13 **caractérisé en ce que** ladite grandeur caractéristique est une puissance.
